# EUROPÄISCHE PATENTANMELDUNG

(11) **EP 3 813 167 A1**
(43) Veröffentlichungstag der Anmeldung: **28.04.2021**
(21) Anmeldenummer: 20214304.6
(22) Anmeldetag: 25.10.2017
(51) Int. Cl.: H01M 6/04, H01M 10/052, H01M 10/34, H01M 50/105, H01M 50/116, H01M 50/124, H01M 50/172, H01M 50/183, H01M 12/06, H01M 12/08

(54) **ENERGIESPEICHERVORRICHTUNG UND HERSTELLUNGSVERFAHREN**

(62) Teilanmeldung aus: 17198359.6
(71) Anmelder: VARTA Microbattery GmbH, 73479 Ellwangen Jagst (DE)
(72) Erfinder: Krebs, Martin, 73494 Rosenberg (DE)
(74) Vertreter: Patentanwaltskanzlei Cartagena

(57) **Zusammenfassung**

Eine Energiespeichervorrichtung (100) umfasst einen Verbund (101) aus einer schichtförmigen positiven Elektrode (102), einer schichtförmigen negativen Elektrode (103) und einem schichtförmigen Separator (104), der zwischen der schichtförmigen positiven Elektrode (102) und der schichtförmigen negativen Elektrode (103) angeordnet ist, ein Gehäuse (105) aus einem ersten Gehäuseteil (106) und einem zweiten Gehäuseteil (107) und einen Elektrolyten, der beim Laden und/oder Entladen der Energiespeichervorrichtung (100) einen lonenstrom zwischen den Elektroden (102, 103) gewährleistet. Die Elektroden (102, 103) umfassen jeweils eine elektrochemische Aktivkomponente. Der schichtförmige Separator (104) umfasst ein poröses Flächengebilde (105). Die Energiespeichervorrichtung (100) zeichnet sich dadurch aus, dass das poröse Flächengebilde (105) einen zentralen Bereich (105a) umfasst, in dem seine Poren mit dem Elektrolyten befüllt sind, sowie einen streifenförmigen, den zentralen Bereich (105a) umschließenden Randbereich (105b), in dem die Poren des porösen Flächengebildes (105) nicht mit dem Elektrolyten befüllt sind. Das erste Gehäuseteil (106) und das zweite Gehäuseteil (107) sind über einen umlaufenden Siegelrahmen (108), der aus einem Siegelmittel gebildet ist, das in dem Randbereich (105b) auf das poröse Flächengebilde (105) aufgebracht wurde, miteinander verbunden. Zur Herstellung der Energiespeichervorrichtung (100) wird durch Aufbringen des Siegelmittels in dem streifenförmigen Randbereich (105b) eine Separator-Siegetrahmen-Einheit gebildet, die zur Bildung des Verbundes (101) mit der schichtförmigen positiven Elektrode (102) und der schichtförmigen negativen Elektrode (103) kombiniert wird.

## Beschreibung

Die Erfindung betrifft eine Energiespeichervorrichtung mit einem Verbund aus einer schichtförmigen positiven Elektrode, einer schichtförmigen negativen Elektrode und einem schichtförmigen Separator, der zwischen der schichtförmigen positiven Elektrode und der schichtförmigen negativen Elektrode angeordnet ist.

Energiespeichervorrichtungen mit einem solchen Aufbau sind beispielsweise aus der WO 2011/151263 A1 bekannt. Wie dort beschrieben ist, lassen sich derartige Schichtverbunde insbesondere mit Hilfe von Druckverfahren, beispielsweise Siebdruckverfahren, herstellen. Bevorzugt sind die beschriebenen Schichtverbünde in einem Foliengehäuse angeordnet, das mit Hilfe eines umlaufenden Siegelrahmens, der bevorzugt aus einer thermoaktivierbaren oder selbstklebenden Folie gebildet wird, versiegelt ist und das den Elektroden-Separator-Stapel - abgesehen von nach außen geführten elektrischen Anschlusskontakten - dichtend umschließt.

Aus der WO 2011/131627 A1 ist eine Druckpaste bekannt, die Anwendung bei der Herstellung von Separator-Elektrolyt-Schichten findet, wie sie die in der WO 2011/151263 A1 beschriebenen gedruckten Energiespeichervorrichtungen aufweisen kann.

Die aus der WO 2011/151263 A1 bekannte Versiegelung mittels des Siegelrahmens führt insbesondere bei Verwendung mehrlagiger Verbundfolien, die als Barriereschicht eine dünne Lage aus einem Metall wie Aluminium aufweisen, regelmäßig zu Problemen. Die Versiegelung erfolgt in der Regel unter Anwendung von Druck und erhöhten Temperaturen. Hierbei kann es jedoch im Bereich der Anschlusskontakte zu elektrischen Kurzschlüssen kommen.

Auch die Verwendung der aus der WO 2011/131627 A1 bekannten Druckpaste ist nicht frei von Problemen. Mittels der Druckpaste hergestellte Separator-Elektrolyt-Schichten können mit sehr geringen Schichtdicken hergestellt werden, weisen aber nicht selten auch eine gewisse Anfälligkeit zur Perforation auf.

Der vorliegenden Erfindung lag die Aufgabe zugrunde, Energiespeichervorrichtungen mit einem Schichtaufbau bereitzustellen, wie er aus der WO 2011/151263 A1 bekannt ist, allerdings unter Umgehung der beschriebenen Probleme.

Zur Lösung dieser Aufgabe schlägt die Erfindung die nachfolgend beschriebene Energiespeichervorrichtung und das nachfolgende beschriebene Verfahren, insbesondere die bevorzugte Ausführungsform der Energiespeichervorrichtung mit den in Anspruch 1 genannten Merkmalen sowie die bevorzugte Ausführungsform des Verfahrens mit den in Anspruch 6 genannten Merkmalen, vor.

Die Energiespeichervorrichtung gemäß der Erfindung umfasst wie die aus dem Stand der Technik bekannten Energiespeichervorrichtungen einen Verbund aus einer schichtförmigen positiven Elektrode, einer schichtförmigen negativen Elektrode und einem schichtförmigen Separator, der zwischen der schichtförmigen positiven Elektrode und der schichtförmigen negativen Elektrode angeordnet ist. Hierbei umfassen die Elektroden jeweils eine elektrochemische Aktivkomponente.

Die Elektroden der Energiespeichervorrichtung werden in einigen bevorzugten Ausführungsformen mittels eines Druckverfahrens, insbesondere mittels eines Siebdruckverfahrens, gebildet.

Die erfindungsgemäße Energiespeichervorrichtung kann grundsätzlich wiederaufladbar oder nicht wiederaufladbar ausgebildet sein. Bevorzugt handelt es sich bei der Energiespeichervorrichtung um eine Zink-Braunstein-Zelle, eine Zink-Luft-Zelle, eine Nickel-Metallhydrid-Zelle oder um eine Lithium-Ionen-Zelle. Die elektrochemischen Aktivkomponenten für die positiven und die negativen Elektroden solcher elektrochemischer Systeme sind dem Fachmann bekannt.

Beispielsweise dient zur Herstellung der negativen Elektrode einer Zink-Braunstein-Zelle bevorzugt eine druckfähige Zinkpaste, die als elektrochemische Aktivkomponente Zinkpulver sowie weiterhin einen geeigneten Binder und ein geeignetes Lösungs- und/oder Dispergiermittel umfasst. Zur Herstellung der positiven Elektrode einer Zink-Braunstein-Zelle dient bevorzugt eine druckfähige Paste, die als elektrochemische Aktivkomponente Braunstein (MnO₂) sowie weiterhin Ruß und/oder Graphit als Leitmaterial sowie einen geeigneten Binder und ein geeignetes Lösungsmittel aufweist.

Zur Herstellung der negativen Elektrode einer Zink-Luft-Zelle kann die gleiche Zinkpaste Verwendung finden wie bei der Herstellung der negativen Elektrode der Zink-Braunstein-Zelle. Die positive Elektrode einer Zink-Luft-Zelle (die Luftkathode) kann grundsätzlich gleichfalls aus einer druckfähigen Paste gebildet werden. Diese umfasst gegebenenfalls als elektrochemische Aktivkomponente ein elektrokatalytisch aktives Material (z.B. ein Edelmetall wie Platin oder Palladium oder ein Manganoxid) sowie Ruß und/oder Graphit als Leitmaterial sowie, soweit erforderlich, einen geeigneten Binder, beispielsweise einen partikulären Kunststoffbinder. Geeignete Materialien zur Herstellung einer Luftkathode sind beispielsweise in der DE 3722019 A1 beschrieben.

Im Gegensatz zu der aus der WO 2011/131627 A1 bekannten Vorgehensweise ist der gemäß der vorliegenden Erfindung verwendete schichtförmige Separator nicht mittels eines Druckverfahrens gebildet. Vielmehr umfasst er ein poröses Flächengebilde und einen Elektrolyten, welcher beim Laden und/oder Entladen der Energiespeichervorrichtung einen lonenstrom zwischen den Elektroden zu gewährleistet. Während der Elektrolyt mittels eines Druckverfahrens verarbeitbar ist, wird das poröse Flächengebilde als separate Komponente bereitgestellt.

Das poröse Flächengebilde dient unter anderem dazu, die Elektroden elektrisch voneinander isolieren. Als poröses Flächengebilde kommt insbesondere eine poröse Folie, beispielsweise aus einem Polyolefin oder aus einem Polyester, in Frage. In vielen bevorzugten Ausführungsformen ist das Flächengebilde ein Vlies oder ein Filz oder ein textiles Gewebe. Diese können beispielsweise aus Polyolefin- oder Polyester-Filamenten gefertigt sein.

Der verwendete Elektrolyt ist abhängig vom jeweils zum Einsatz kommenden elektrochemischen System. Beispielsweise kann es sich bei dem Elektrolyten im Fall einer Zink-Braunstein-Zelle oder einer Zink-Luft-Zelle um eine Lauge, beispielsweise um Kalilauge, oder um einen neutralen oder nahezu neutralen Elektrolyten, beispielsweise Ammoniumchlorid- oder Zinkchlorid-Lösung, handeln.

Weiterhin umfasst die Energiespeichervorrichtung ein Gehäuse aus einem ersten Gehäuseteil und einem zweiten Gehäuseteil. Bei diesen handelt es sich bevorzugt um zwei separate Gehäuseteile. Es ist aber grundsätzlich möglich, die beiden Gehäuseteile beispielsweise durch Knicken oder Falten aus einem geeigneten Gehäusematerial zu bilden, so dass die Gehäuseteile über eine Knick- oder Faltlinie miteinander verbunden sind.

Besonders zeichnet sich die Energiespeichervorrichtung dadurch aus, dass das poröse Flächengebilde einen zentralen Bereich umfasst, in dem seine Poren mit dem Elektrolyten befüllt sind, sowie einen streifenförmigen, den zentralen Bereich umschließenden Randbereich, in dem die Poren des porösen Flächengebildes nicht mit dem Elektrolyten befüllt sind. Das erste Gehäuseteil und das zweite Gehäuseteil sind, bevorzugt an ihren Rändern, über einen umlaufenden Siegelrahmen miteinander verbunden, der aus einem Siegelmittel gebildet ist, das in dem Randbereich auf das poröse Flächengebilde aufgebracht wurde.

Die erfindungsgemäße Konstruktion wirkt einer Perforation des Separators entgegen, das verwendete Flächengebilde ist diesbezüglich sehr viel resistenter als durch ein Druckverfahren hergestellte Separatorschichten aus einem partikulären Material. Auch wurden keine Kurzschlüsse im Bereich des Siegelrahmens mehr beobachtet.

In der Regel weist das poröse Flächengebilde zwei Flachseiten und einen umlaufenden Rand auf. Zum Einbringen des Elektrolyten in die Poren des porösen Flächengebildes kann der Elektrolyt nur auf eine der Flachseiten oder aber auch auf beide Seiten aufgebracht werden. Gleiches gilt für das Siegelmittel. Auch dieses kann zur Bildung des Siegelrahmens nur auf eine der Flachseiten oder aber auch auf beide Seiten aufgebracht werden.

Innerhalb des Verbundes aus der schichtförmigen positiven Elektrode, der schichtförmigen negativen Elektrode und dem schichtförmigen Separator bestehen großflächige, zweidimensionale Kontaktbereiche zwischen dem Separator und den Elektroden. Es ist bevorzugt, dass die positive und die negative Elektrode auf unterschiedlichen Seiten des Separators in flächigem, unmittelbarem Kontakt mit dem zentralen Bereich stehen.

Es gibt zwei besonders bevorzugte Varianten A und B der erfindungsgemäßen Energiespeichervorrichtung.

### Variante A

Gemäß Variante A ist die negative Elektrode eine metallbasierte Anode, die als elektrochemische Aktivkomponente ein Metall umfasst, das beim Entladen der Energiespeichervorrichtung oxidiert wird, und die positive Elektrode ist eine Luftkathode und umfasst als elektrochemische Aktivkomponente einen Katalysator, der eine Reduktion von Luftsauerstoff unter Elektronenaufnahme in der Luftkathode ermöglicht. Kurzum, bevorzugt ist die Energiespeichervorrichtung gemäß Variante A eine Metall-Luft-Zelle.

Bei dieser Variante ist es bevorzugt, dass das erste Gehäuseteil aus einer Folie besteht während als zweites Gehäuseteil eine Kunststoffschicht dient, in die eine metallische Ableiterstruktur eingebettet ist, die mit der Luftkathode in unmittelbarem Kontakt steht.

Bevorzugt ist die Luftkathode als Gasdiffusionselektrode ausgebildet. In diesem Fall umfasst die Luftkathode bevorzugt neben den erwähnten Komponenten Katalysator und Leitmaterial einen hydrophoben Binder, beispielsweise einen Binder aus Teflon (PTFE).

Als oxidierbares Metall kommt bevorzugt Zink zum Einsatz.

Bei der Folie, aus der das erste Gehäuseteil besteht, handelt es sich bevorzugt um eine Kunststofffolie oder Kunststoffverbundfolie. Als Gehäusematerialien für Energiespeichervorrichtungen geeignete Kunststofffolien und Kunststoffverbundfolien sind dem Fachmann grundsätzlich bekannt. Geeignete Kunststoffverbundfolien umfassen in der Regel eine Lage aus Metall sowie zwei Lagen aus Kunststoff, wobei die Lage aus Metall zwischen den zwei Kunststofflagen angeordnet ist.

Bei der Kunststoffschicht, aus der das erste Gehäuseteil besteht, handelt es sich bevorzugt um eine Schicht aus einem hydrophoben Kunststoff, insbesondere dem erwähnten PTFE. Besonders bevorzugt ist die Schicht eine mikroporöse Membran aus gerecktem (expandiertem) Polytetrafluorethylen (ePTFE), die unter dem Handelsnamen GORE-TEX® vertrieben wird.

Bei der Ableiterstruktur, die in die Kunststoffschicht eingebettet ist, handelt es sich bevorzugt um ein Metallgitter oder um ein Metallnetz, beispielsweise aus Nickel oder aus einer Nickellegierung.

### Variante B

Gemäß Variante B umfassen die Elektroden als elektrochemische Aktivkomponente beide jeweils ein Material, das sich beim Laden und/oder Entladen der Energiespeichervorrichtung chemisch umwandelt. Beispiele für eine solche Zelle sind die erwähnte Zink-Braunstein-Zelle, die Nickel-Metallhydrid-Zelle und die Lithium-Ionen-Zelle.

Bei dieser Variante ist es bevorzugt, dass das erste Gehäuseteil und das zweite Gehäuseteil beide jeweils aus einer Folie, insbesondere aus dem gleichen Material, bestehen. Auch hier ist die Folie bevorzugt eine der als Gehäusematerial für Energiespeichervorrichtungen geeigneten Kunststofffolien oder Kunststoffverbundfolien.

Bei allen Ausführungsformen ist es bevorzugt, dass der Siegelrahmen gemeinsam mit den Gehäuseteilen einen Hohlraum einschließt, in dem der zentralen Bereich des Flächengebildes, im Fall von Variante B gegebenenfalls auch der gesamte Verbund, angeordnet ist.

Der umlaufende Siegelrahmen ist bevorzugt in den Randbereich des Flächengebildes eingebettet. Hierunter soll verstanden werden, dass Poren des Flächengebildes in dem Randbereich mit dem Siegelmittel befüllt sind, so dass der Siegelrahmen das Flächengebilde durchdringt und auf dessen beiden Flachseiten jeweils aus dem Flächengebilde heraustritt.

In aller Regel umfasst die Energiespeichervorrichtung einen elektrischen Leiter, der mit der mindestens einen negativen Elektrode elektrisch verbunden und aus dem Gehäuse herausgeführt ist. Im einfachsten Fall kann es sich bei diesem Leiter um eine elektrisch leitende Schicht handeln, die auf einer ins Innere des Gehäuses weisenden Seite eines der Gehäuseteile angeordnet ist. Eine solche Schicht kann gleichzeitig als Stromkollektor dienen. In besonders bevorzugten Ausführungsformen kontaktiert die Schicht daher großflächig die negative Elektrode. Der Teil der Schicht, der aus dem Gehäuse herausgeführt ist, ist bevorzugt bahnförmig ausgebildet.

Es ist auch möglich, dass die negative Elektrode einen separaten Stromkollektor aufweist, beispielsweise ein metallisiertes Vlies oder ein metallisiertes Gewebe, das elektrisch mit dem aus dem Gehäuse herausgeführten Leiter elektrisch verbunden ist.

Der mit der negativen Elektrode verbundene elektrische Leiter und gegebenenfalls ein daran gekoppelter Stromkollektor sind bevorzugt auf Basis von Silber, Kupfer und/oder Graphit ausgebildet. Geeignet sind beispielsweise Silberleitpasten, die auch mittels eines Druckverfahrens applizierbar sind. Alternativ können auch Metallfolien als Stromkollektoren und/oder als elektrische Leiter verwendet werden. Auch das Aufbringen dünner Metallschichten auf die erwähnte ins Innere des Gehäuses weisende Seite eines der Gehäuseteile mittels eines PVD- oder CVD-Verfahrens ist möglich.

Die Energiespeichervorrichtung umfasst in der Regel weiterhin einen elektrischen Leiter, der mit der mindestens einen positiven Elektrode elektrisch verbunden und aus dem Gehäuse herausgeführt ist. Bei diesem elektrischen Leiter handelt es sich insbesondere im Fall der Variante B um eine elektrisch leitende Schicht auf einer ins Innere des Gehäuses weisenden Seite eines der Gehäuseteile angeordnet ist. Diese kann ausgebildet sein wie die mit der negativen Elektrode ausgebildete Schicht. Bevorzugt besteht ist sie auf Basis von Silber, Nickel oder Graphit ausgebildet. Ebenfalls wie im Fall der negativen Elektrode kann die Schicht selbst als Stromkollektor dienen oder aber an einen separaten Stromkollektor angekoppelt sein.

Im Fall der Variante A handelt es sich bei dem elektrischen Leiter bevorzugt um die erwähnte in die Kunststoffschicht eingebettete Leiterstruktur, beispielsweise um ein metallisches Netz oder um ein metallisches Gitter An den Rändern der Kunststoffschicht kann der eingebettete Leiter von außerhalb des Gehäuses elektrisch kontaktiert werden.

Bevorzugt zeichnet sich die erfindungsgemäße Energiespeichervorrichtung zusätzlich durch mindestens eines der folgenden Merkmale aus:
- Die positive Elektroden ist rechteckig oder quadratisch ausgebildet.
- Die negative Elektrode ist rechteckig oder quadratisch ausgebildet.
- Das poröse Flächengebilde ist rechteckig oder quadratisch ausgebildet.
- Die positive Elektrode weist eine Breite im Bereich von 0,2 mm bis 10 cm und eine Länge im Bereich von 0,2 mm bis 20 cm auf.
- Die negative Elektrode weist eine Breite im Bereich von 0,5 cm bis 10 cm und eine Länge im Bereich von 0,5 cm bis 20 cm auf.
- Das poröse Flächengebilde weist eine Breite im Bereich von 0,6 cm bis 12 cm und eine Länge im Bereich von 0,6 cm bis 22 cm auf.
- Die positive Elektrode weist eine Dicke im Bereich von 2 µm bis 200 µm auf.
- Die negative Elektrode weist eine Dicke im Bereich von 10 µm bis 200 µm auf.
- Der Separator weist eine Dicke im Bereich von 10 µm bis 100 µm auf.

Ein Verfahren zur Herstellung der beschriebenen elektrochemischen Energiespeichervorrichtung umfasst stets die folgenden Schritte:
- In einem ersten Schritt wird eine Separator-Siegelrahmen-Einheit hergestellt: Hierzu wird das beschriebene poröse Flächengebilde bereitgestellt. Dessen Poren werden unter Ausbildung des zentralen Bereichs und des den zentralen Bereich umschließenden Randbereichs mit dem Elektrolyten befüllt. Weiterhin wird das Siegelmittel in dem streifenförmigen, den zentralen Bereich umschließenden Randbereich zur Ausbildung des umlaufenden Siegelrahmens aufgebracht.
- In einem weiteren Schritt erfolgt die Bildung des oben beschriebenen Verbundes durch Kombination der Separator-Siegelrahmen-Einheit mit der schichtförmigen positiven Elektrode und der schichtförmigen negativen Elektrode.

Für die Kombination mit der Separator-Siegelrahmen-Einheit werden die positive Elektrode und die negative Elektrode bevorzugt in Form von Schichten auf dem ersten und dem zweiten Gehäuseteil bereitgestellt, beispielsweise mittels eines Druckverfahrens. Gegebenenfalls werden auf die Gehäuseteile in einem vorgeschalteten Schritt noch Ableiterstrukturen aufgebracht.

Das erste und das zweite Gehäuseteil werden dann über den Siegelrahmen miteinander verbunden.

Bei dem Siegelmittel handelt es sich in besonders bevorzugten Ausführungsformen um eine Klebstoffmasse, die mittels eines Druckverfahrens oder mittels einer Klebstoffraupe applizierbar ist. Hierbei lässt sich grundsätzlich jeder Klebstoff verarbeiten, der gegenüber dem jeweils verwendeten Elektrolyten resistent ist und eine ausreichende Haftung zu den verwendeten Gehäuseteilen ausbilden kann.

Bei dem Siegelmittel kann es sich insbesondere auch um eine gelöste Polymerzusammensetzung handeln, zu deren Verfestigung enthaltenes Lösungsmittel entfernt werden muss.

Es ist auch möglich, als Siegelmittel eine thermoaktivierbare Folie, insbesondere eine Schmelzfolie, oder eine selbstklebende Folie, zu verwenden. Beispielsweise ist es möglich, zur Ausbildung des Siegelrahmens auf beide Flachseiten des porösen Flächengebildes eine Schmelzfolie zu positionieren und unter Druck und hoher Temperatur (> der Schmelztemperatur der Schmelzfolie) die Ränder des ersten und des zweiten Gehäuseteils auf die Schmelzfolie zu pressen.

Das Siegelmittel wird in den meisten Ausführungsformen in flüssiger Form auf die Randbereich aufgebracht oder aber bei der Bildung des Siegelmittels verflüssigt. Gegebenenfalls kann es erforderlich sein, es abkühlen und aushärten zu lassen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigt schematisch:
Fig. 1 die Herstellung einer Ausführungsform einer erfindungsgemäßen Energiespeichervorrichtung gemäß obiger Variante B sowie im Querschnitt die hergestellte Energiespeichervorrichtung.
Fig. 2 im Querschnitt eine Ausführungsform einer Energiespeichervorrichtung gemäß obiger Variante A.

Zur Herstellung einer Ausführungsform einer erfindungsgemäßen Energiespeichervorrichtung 100 wird eine Separator-Siegelrahmen-Einheit gemäß B gebildet. Hierzu wird unter Ausbildung des zentralen Bereichs 105a und des den zentralen Bereich 105a umschließenden Randbereichs 105b auf das Vlies 105 ein geeigneter Elektrolyt aufgedruckt. Im Bereich 105a sind die Poren des Vlieses 105 mit dem Elektrolyten befüllt. Der Bereich 105b ist hingegen frei von Elektrolyt. In diesem Bereich wird zur Ausbildung eines umlaufenden Siegelrahmens 108 als Siegelmittel ein Klebstoff aufgetragen.

In einem weiteren Schritt wird die gebildete Separator-Siegelrahmen-Einheit mit einer schichtförmigen positiven Elektrode 102 und einer schichtförmigen negativen Elektrode 103 kombiniert. Diese werden in vorgeschalteten Schritten auf den Gehäuseteilen 106 und 107 mittels eines Druckverfahrens hergestellt. Hierzu werden auf die Gehäuseteile zunächst metallische Schichten 109 und 110 aufgebracht, die als elektrische Leiter fungieren sollen. Auf diese wird unter Ausbildung der Elektroden 102 und 103 jeweils eine Schicht aus einem Elektrodenmaterial, das eine geeignete elektrochemische Aktivkomponente umfasst, aufgedruckt.

Bei der Kombination der Separator-Siegelrahmen-Einheit mit einer schichtförmigen positiven Elektrode 102 und einer schichtförmigen negativen Elektrode 103 verbindet der Siegelrahmen die Gehäuseteile 106 und 107 miteinander. Gemeinsam schließen die Gehäuseteile 106 und 107 und der Siegelrahmen 108 einen Hohlraum ein, in dem der zentralen Bereich 105a des Flächengebildes 105 und die Elektroden 102 und 103 angeordnet sind.

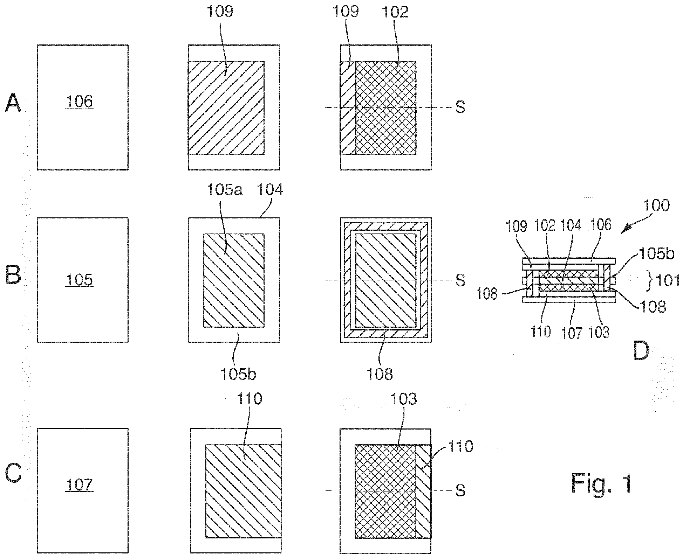

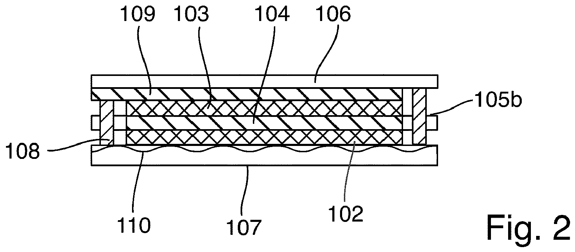

Bei der in Fig. 2 dargestellten Energiespeichervorrichtung 100 handelt es sich um eine Metall-Luft-Zelle. Diese weist einen sehr ähnlichen Aufbau wie die in Fig. 1 dargestellte Energiespeichervorrichtung auf. Es gibt allerdings einen wesentlichen Unterschied. Vorliegend übernimmt nämlich das Gehäuseteil 107 eine Ableiterfunktion für die Luftkathode 102. Das Gehäuseteil 107 umfasst eine mikroporöse PTFE-Schicht, in die das Metallnetz 110 als elektrischer Leiter eingebettet ist. Eine separate Ableiterschicht ist nicht vorgesehen. An der der Luftkathode 102 zugewandten Seite des Gehäuseteils 107 ist das Metallnetz 110 von außerhalb der PTFE-Schicht zugänglich und tritt unmittelbar mit der Luftkathode 103 in Kontakt. Über den Siegelrahmen 108 ist die PTFE-Schicht mit dem Gehäuseteil 106 verbunden.

## Patentansprüche

1. Energiespeichervorrichtung (100) mit den Merkmalen
a: die Energiespeichervorrichtung (100) umfasst einen Verbund (101) aus einer schichtförmigen positiven Elektrode (102), einer schichtförmigen negativen Elektrode (103) und einem schichtförmigen Separator (104), der zwischen der schichtförmigen positiven Elektrode (102) und der schichtförmigen negativen Elektrode (103) angeordnet ist,
b: die Elektroden (102, 103) umfassen jeweils eine elektrochemische Aktivkomponente,
c: der schichtförmige Separator (104) umfasst ein poröses Flächengebilde (105),
d: die Energiespeichervorrichtung (100) umfasst einen Elektrolyten, der beim Laden und/oder Entladen der Energiespeichervorrichtung (100) einen lonenstrom zwischen den Elektroden (102, 103) gewährleistet, und
e: die Energiespeichervorrichtung (100) umfasst ein Gehäuse (105) aus einem ersten Gehäuseteil (106) und einem zweiten Gehäuseteil (107), *welche jeweils aus einer Folie bestehen,*
sowie den zusätzlichen Merkmalen
f: das poröse Flächengebilde (105) umfasst einen zentralen Bereich (105a), in dem seine Poren mit dem Elektrolyten befüllt sind, sowie einen streifenförmigen, den zentralen Bereich (105a) umschließenden Randbereich (105b), in dem die Poren des porösen Flächengebildes (105) nicht mit dem Elektrolyten befüllt sind, und
g: das erste Gehäuseteil (106) und das zweite Gehäuseteil (107) sind über einen umlaufenden Siegelrahmen (108) miteinander verbunden, der aus einem Siegelmittel gebildet ist, das in dem Randbereich (105b) auf das poröse Flächengebilde (105) aufgebracht wurde.

2. Energiespeichervorrichtung nach Anspruch 1 mit dem folgenden zusätzlichen Merkmal:
a: Die Elektroden (102, 103) umfassen als elektrochemische Aktivkomponente jeweils ein Material, das sich beim Laden und/oder Entladen der Energiespeichervorrichtung (100) chemisch umwandelt.
b: Die Energiespeichervorrichtung ist eine Zink-Braunstein-Zelle, eine Nickel-Metallhydrid-Zelle oder eine Lithium-Ionen-Zelle.

3. Energiespeichervorrichtung nach einem der vorhergehenden Ansprüche mit einer Kombination der folgenden zusätzlichen Merkmale:
a: Der Siegelrahmen (108) schließt gemeinsam mit den Gehäuseteilen (106, 107) einen Hohlraum ein, in dem der zentralen Bereich (105a) des Flächengebildes (105), gegebenenfalls der gesamte Verbund (101), angeordnet ist.
b: Der umlaufende Siegelrahmen ist in den Randbereich (105b) eingebettet.

4. Energiespeichervorrichtung nach einem der vorhergehenden Ansprüche mit einer Kombination der folgenden zusätzlichen Merkmale:
a: Sie umfasst einen elektrischen Leiter (109), der mit der mindesten einen negativen Elektrode (103) elektrisch verbunden und aus dem Gehäuse (105) herausgeführt ist.
b. Bei dem elektrischen Leiter (109) handelt es sich um eine elektrisch leitende Schicht auf einer ins Innere des Gehäuses (105) weisenden Seite des ersten Gehäuseteils (106).

5. Energiespeichervorrichtung nach einem der vorhergehenden Ansprüche mit einer Kombination der folgenden zusätzlichen Merkmale:
a: Sie umfasst einen elektrischen Leiter (110), der mit der mindesten einen positiven Elektrode (102) elektrisch verbunden und aus dem Gehäuse (105) herausgeführt ist.
b. Bei dem elektrischen Leiter (110) handelt es sich um eine elektrisch leitende Schicht auf einer ins Innere des Gehäuses (105) weisenden Seite des zweiten Gehäuseteils (107).

6. Verfahren zur Herstellung einer elektrochemischen Energiespeichervorrichtung (100) nach einem der vorhergehenden Ansprüche mit den Schritten
a: Herstellung einer Separator-Siegelrahmen-Einheit durch
- Bereitstellung des porösen Flächengebildes (105),
- Befüllen der Poren des Flächengebildes (105) mit dem Elektrolyten unter Ausbildung des zentralen Bereichs (105a) und des den zentralen Bereich (105a) umschließenden Randbereichs (105b),
- Aufbringen des Siegelmittels in dem streifenförmigen Randbereich (105b) zur Ausbildung des umlaufenden Siegelrahmens (108),
und
b: Bildung des Verbundes (101) durch Kombination der Separator-Siegelrahmen-Einheit mit der schichtförmigen positiven Elektrode (102) und der schichtförmigen negativen Elektrode (103).
